(19) Europäisches Patentamt
European Patent Office
Office européen des brevets

(11) **EP 0 919 655 B2**

(12) **NEW EUROPEAN PATENT SPECIFICATION**
After opposition procedure

(45) Date of publication and mention
of the opposition decision:
**10.08.2011 Bulletin 2011/32**

(45) Mention of the grant of the patent:
**27.08.2003 Bulletin 2003/35**

(21) Application number: **98308916.0**

(22) Date of filing: **30.10.1998**

(51) Int Cl.:
*D04B 21/10* (2006.01)   *A01F 15/07* (2006.01)

(54) **Modified shuss knitted netting**

Gewirktes Netz mit modifiziertem Schuss

Filet tricoté à trame modifiée

(84) Designated Contracting States:
**AT BE CH CY DE DK ES FI FR GB GR IE IT LI LU MC NL PT SE**
Designated Extension States:
**AL LT LV MK RO SI**

(30) Priority: **25.11.1997 US 978235**

(43) Date of publication of application:
**02.06.1999 Bulletin 1999/22**

(60) Divisional application:
**03018521.9 / 1 371 768**
**03018522.7 / 1 369 516**

(73) Proprietor: **Tama Plastic Industry**
**19236 Mishmar Ha'Emek (IL)**

(72) Inventors:
• **Mass, Nissim**
  **19236 (IL)**

• **Leiber, Yuval**
  **19236 (IL)**

(74) Representative: **Lederer, Christian**
**Taylor Wessing**
**Isatorplatz 8**
**80331 München (DE)**

(56) References cited:
EP-A- 0 304 977     EP-A1- 0 304 104
EP-A1- 0 304 977    DE-A- 4 301 232
DE-A1- 4 301 231    DE-A1- 4 301 242
DE-C1- 3 630 821    FR-A- 2 061 251
US-A- 4 569 439     US-A- 4 569 439
US-A- 4 570 789     US-A- 4 570 789
US-A- 5 043 046     US-A- 5 048 353
US-A- 5 104 714     US-A- 5 383 371

• W. SCHINKOREIT: 'Wirktechniken durch Fadenreservebildung in Schussrichtung' MELLIAND TEXTILBERICHTE December 1995, pages 1090 - 1090

EP 0 919 655 B2

## Description

This invention relates to knitted Raschel netting, and more particularly, to knitted Raschel netting as is used in wrapping, e.g. loads on pallets and bales of agricultural products. More particularly, the invention relates to knitted Raschel netting used in wrapping wherein the knitted netting is designed to minimise the transverse shrinkage of the netting.

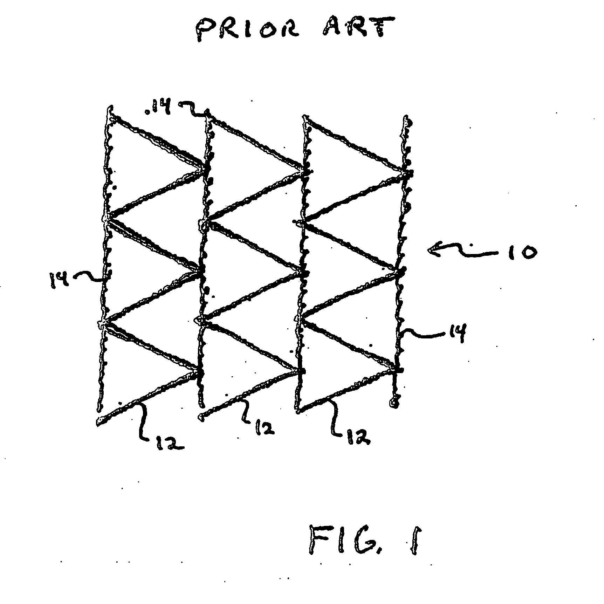

Figure 1 of the accompanying drawings shows a prior art knitted Raschel netting 10 including schuss ribbons 12 and franze ribbons 14 of the type described in US Patent No. 5104714. Because of the triangular pattern in the knitted netting, all Raschel netting becomes narrower when pulled lengthwise. For example, when wrapping a pallet with conventional Raschel netting, when the netting is stretched about 60%, the netting may change in width from 50cm to about 25cm. When a longitudinal force is applied to the knitted netting, the franzes become longer. The longer the franze gets, the longer the schuss must be to maintain the same netting dimensions. However, up to a certain degree of elongation, the schuss does not extend because the schuss tends to straighten rather than elongate. The straighter the schusses, the smaller the distance between franzes, and the narrower the netting becomes resulting in transverse shrinkage of the knitted netting.

Transverse shrinkage has been inherent in Raschel knitted netting for as long as machines to produce such knitted netting have existed. It is well known that conventional Raschel netting becomes narrower even while being knitted on Raschel knitting machines. For example, if 48" Raschel knitted netting is desired, about 50" netting is knitted because the netting becomes narrower by about 2" between the knitting and the winding zones.

When a constant netting width is needed, the width can be regulated by changing the schuss tension in the knitting machine. The producers of knitted netting machines provide a facility on their machines to regulate the netting width, which depends on many factors including the type of material, temperature, ribbon dimensions, knitting tension, and knitting pattern. The knitting machine producers are aware that netting shrinkage is inherent in Raschel knitted netting. Such producers are also aware that increased tension on the schuss creates a narrower netting and loosened tension on the schuss prevents narrowing to some degree. Changing the schuss tension, however, is insufficient to fully overcome transverse shrinkage in knitted netting.

US patent No. 4781291 acknowledges that a problem with Raschel knitted netting is that it shrinks in overall width when pulled lengthwise due to the geometric pattern of the knitted netting and proposes a netting of square openings, instead of Raschel triangles, to solve the problem. By having transverse strands perpendicular to the longitudinal strands, creating rectangular openings instead of triangular, transverse shrinkage is overcome.

Accordingly, there is a need in the art for a knitted netting which does not shrink at all during the production process. Further, there is a need in the art for a knitted netting that maintains its full width during production and may also be widened to more than its full production width.

With the foregoing in mind, the Modified Schuss Knitted Netting of the present invention provides a "modified" schuss relative to the schuss of conventional knitted netting. A modified schuss is a schuss whose length is as long as is desired, which is in excess of and distinct from conventional knitted netting with schuss loosened only to the maximum permitted by the knitting machine.

It is known from US-A-4569439 to provide a knitted netting which includes longitudinal polyolefin ribbons and lateral polyolefin ribbons knitted with the longitudinal polyolefin ribbons on a machine. DE-A-4301232 also discloses a knitted netting comprising longitudinal strands and lateral strands knitted with the longitudinal strands to form knitted netting.

A knitted Raschel netting according to the present invention is characterised in that when rolled as knitted on the machine, at least one of said lateral polyolefin ribbons of the knitted netting has an actual schuss length more than 110% of a calculated schuss length for the knitted netting. The invention further relates to a method of production according to claim 7.

The invention can be used in a cylindrical bale of agricultural crops wrapped in a knitted netting having longitudinal polyolefin ribbons and lateral polyolefin ribbons knitted with the longitudinal polyolefin ribbons on a Raschel machine to form knitted netting and, when rolled as knitted on the machine, the lateral polyolefin ribbons of the knitted netting having an actual schuss length more than 110% of a calculated schuss length for the knitted netting and the knitted netting extending about the circumference and over the edge of the cylindrical body enclosing and maintaining the crops therein.

In one embodiment, said at least one of said lateral polyolefin ribbons comprises a plurality of polyolefin ribbons.

Preferably, the plurality of polyolefin ribbons are on the outside edges of the knitted netting.

In another embodiment, said plurality of polyolefin ribbons comprises all of said lateral ribbons.

Preferred embodiments of the invention will now be described, by way of example only, with reference to the accompanying drawings, in which:

Figure 1 shows a prior art knitted Raschel netting;
Figure 2 shows a knitted Raschel netting in accordance with the invention;
Figure 3a illustrates a roll of knitted netting;
Figure 3b illustrates a partially unrolled roll of knitted netting;
Figure 3c illustrates calculation of schuss length for knitted netting;
Figure 4a shows a corrugated trick plate for use in a knitting machine;
Figure 4b shows a single round piece for use with a corrugated trick plate;
Figure 5 shows a shrinkage/elongation curve for conventional knitted netting;
Figure 6 shows a shrinkage/elongation curve for knitted netting according to the invention;
Figure 7 shows a hay bale wrapped with conventional knitted netting; and
Figure 8 shows a hay bale wrapped with knitted netting according to the invention.

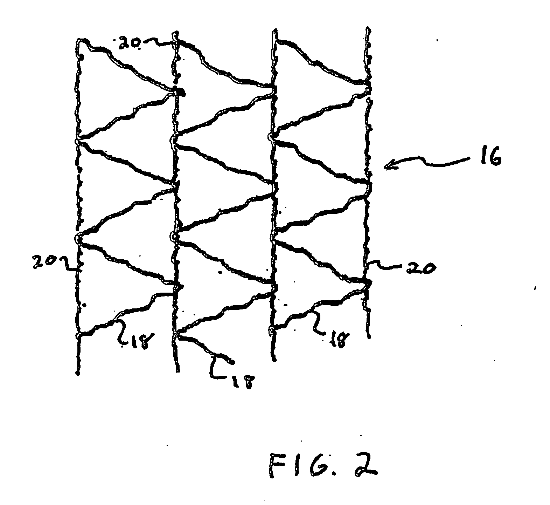

Figure 2 shows a knitted Raschel netting 16 in accordance with the invention which has a "modified" schuss 18 relative to the schuss of conventional knitted netting. The modified schuss has a length longer than the schuss length obtained when loosened to the maximum permitted by the knitting machine. For example, a knitted netting including a modified schuss that is about 30% longer than the prior art schuss provided by the knitting machine becomes narrower by about 12% at 60% elongation of the knitted netting during wrapping, while the same netting without modified schuss becomes narrower by about 50% at 60% elongation.

The schuss is created by moving the schuss ribbon between two needles while the netting being knitted moves longitudinally in the knitting machine. Because of the two directional movement, the schuss 18 creates legs of a triangle while the franze 20 creates a triangle base. The tension of the schuss can be adjusted, but is limited and can only produce schuss with an actual length less than 110% of the calculated length of the leg of the triangle created by moving the schuss ribbon between two needles at the longitudinal speed.

The preferred amount of elongation of the schuss length depends upon the particular netting application. For elastic pallet wrapping, the preferred actual schuss length is about 135% of the calculated schuss length for the netting. For conventional wrapping netting with an elongation at break of about 20%, a modified schuss is not needed because such netting only elongates about 1-3% in normal use and does not exhibit transverse shrinkage.

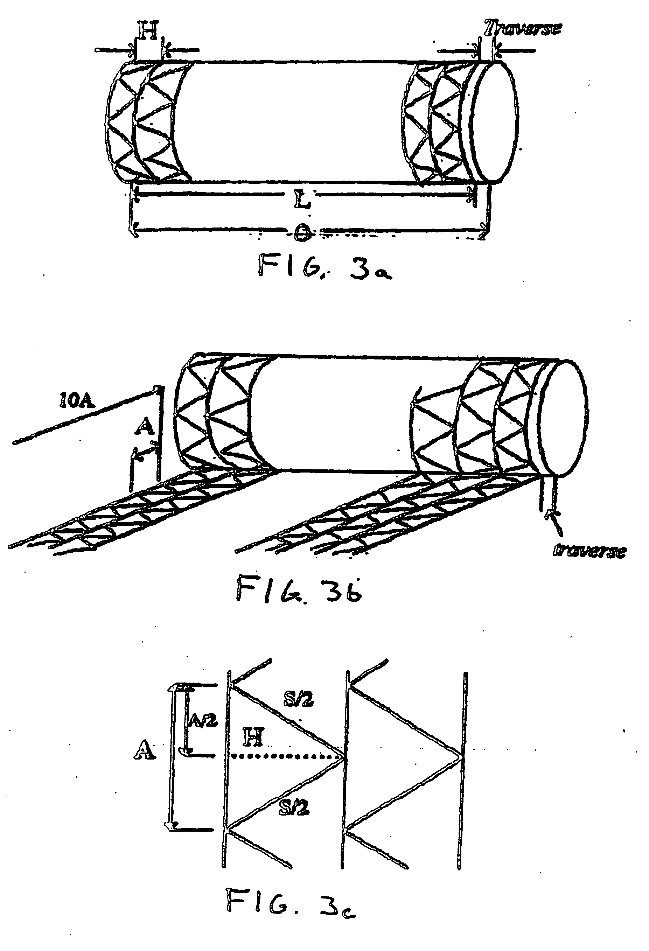

The characteristics of the Modified Schuss Knitted Netting of the present invention may be seen by comparing an actual schuss length of a given netting length with a calculated schuss length. Modified Schuss Knitted Netting of the invention has an actual schuss length more than 110% of the calculated schuss length. The suggested procedure for comparing actual schuss length with calculated schuss length is illustrated in Figures 3a and 3c and may be described as follows:

1) Measure the length (L) between the two extreme franzes on a roll of knitted netting as shown in Figure 3a. (The overall roll length is shown as O).

2) Divide the length (L) by the number of franzes minus one to define an average distance between two franzes (H).

3) Unroll some of the knitted netting and measure the length between 10 such distances (10A) and divide them by 10 to define an average length between two triangle legs (A) as shown in Figure 3b. This measurement should be performed while applying about 50g to the franzes on which the shuss will be measured.

4) Calculate the schuss (S) length between two triangle legs as shown in Figure 3c as follows:

$$ S = 2\sqrt{(A/2)^2 + H^2} $$

5) Determine an actual schuss length for distance 10A by unrolling some of the knitted netting and transversely cutting the franzes and schusses. Take out the schuss between two franzes and measure the length of the schuss while flattening the schuss on a flat plate to determine the actual schuss length (ASL).

6) For Modified Schuss Knitted Netting of the invention, ASL will exceed 10S by more than 10%.

C Existing Raschel knitting machines do not provide a facility for providing a modified schuss in accordance with the present invention. The maximum loosened schuss which can be knitted on these machines can at best widen the netting a little bit, but even so the netting will tend to narrow.

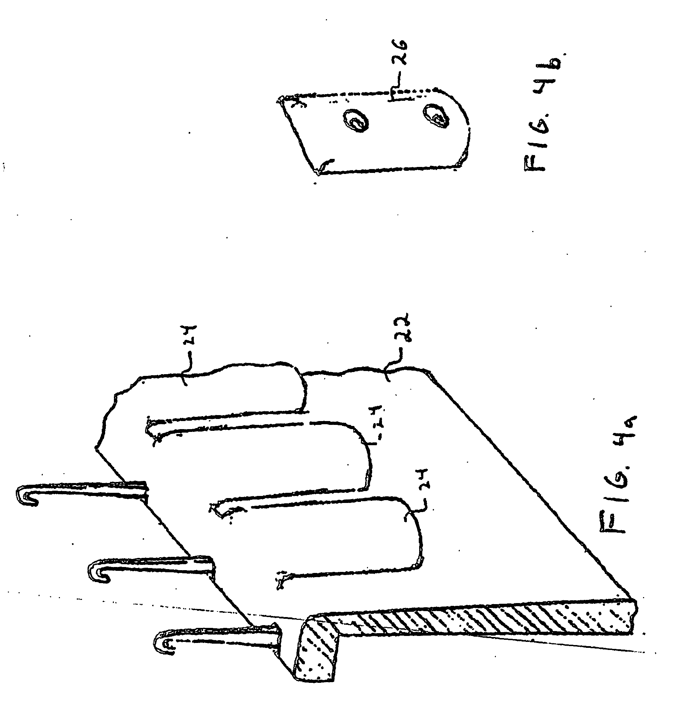

In order to create the modified schuss according to the invention and to overcome such knitting machine limitations, a corrugated trick plate as shown in Figure 4a may be incorporated into the knitting machine. The use of a conventional trick plate is illustrated, for example, in US patent No. 3646782. The corrugated trick plate includes a flat plate 22 providing corrugations 24 which force the schuss to traverse a longer distance as the shusses move between the knitting machine needles than would be traversed in a conventional knitting machine. The schusses cannot move in a straight line; the schusses must follow the curvature of the corrugated trick plate. Accordingly, when the knitted netting leaves the corrugated trick plate, the schuss length is longer than the original The thicker the corrugations between needles on the flat plate, the longer the schusses that are produced.

Where an equal amount of schuss modification is needed over the complete netting width, a corrugated plate as described with respect to Figure 4a may be used. Where modified schuss is required only on particular schusses, a flat plate absent corrugations (not shown) may be used to produce a thicker area between particular needles. This can be achieved by attaching a round piece 26 to the flat plate by means of a screw or other suitable fastener. Round piece 26 is shown in Figure 4b.

With the Modified Schuss Knitted Netting it is not possible to regulate the netting width by increasing the schuss tension as was done in conventional knitted netting. When knitting with modified schuss, the width will always remain the same and will be a function of the number of needles and the distance between them. There will be no shrinking during the knitting process. The width in the Modified Schuss Knitted Netting can differ only in quantum amounts equivalent to the distance between needles.

It may be appreciated that there are many distinct advantages to the present invention. Insertion or removal of a single round piece is simple. Locating the right parts in the right place when different amounts of schuss modification are needed at different places across the netting is simplified, as a different thickness of the single round piece can be used.

It is important that when the same amount of schuss modification is needed over the netting width, a single corrugated trick plate (as shown in Figure 4a) may be used.

The amount of schuss modification created on the complete netting width can be varied to some degree by regulating the schuss tension. This is done by regulating the schuss tension on the existing machine. Only when a different amount of modified schuss across the netting width is needed would different single round pieces (distinguishable by their different thicknesses) be used.

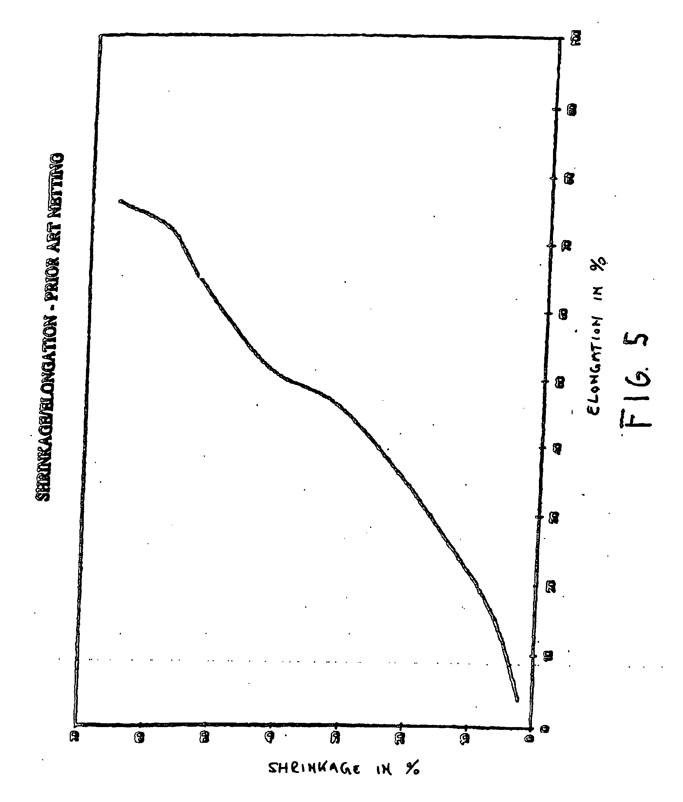

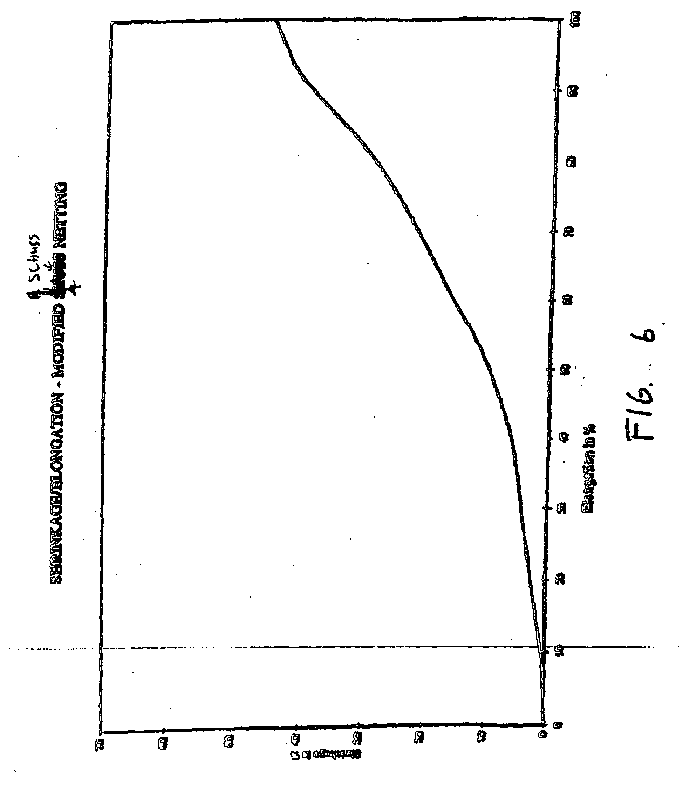

It will be appreciated by those skilled in the art that the Modified Schuss Knitted Netting according to the invention provides many unexpected advantages over conventional knitted netting. In particular, die Modified Schuss Knitted Netting is somewhat stronger, perhaps because the schusses do not create radial stresses on the franzes as in conventional knitted netting. Comparing Figures 5 and 6, it will be appreciated that the slope of the shrinkage/elongation curve created by the Modified Schuss Knitted Netting is a function of the amount by which the schuss is modified. A very small degree of shrinkage always occurs in the Modified Schuss Knitted Netting at the moment when longitudinal force is applied.

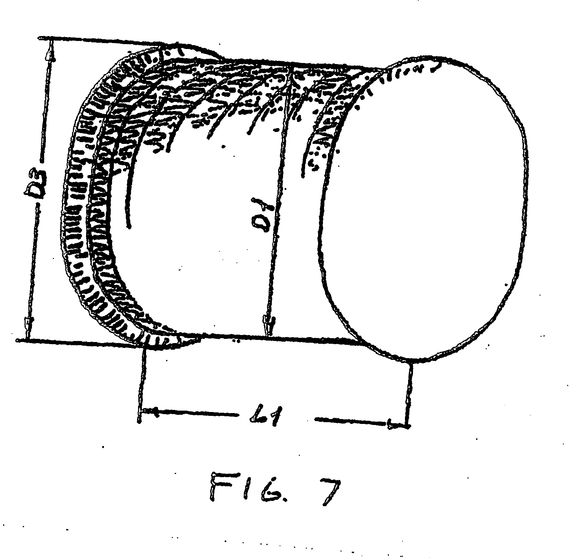

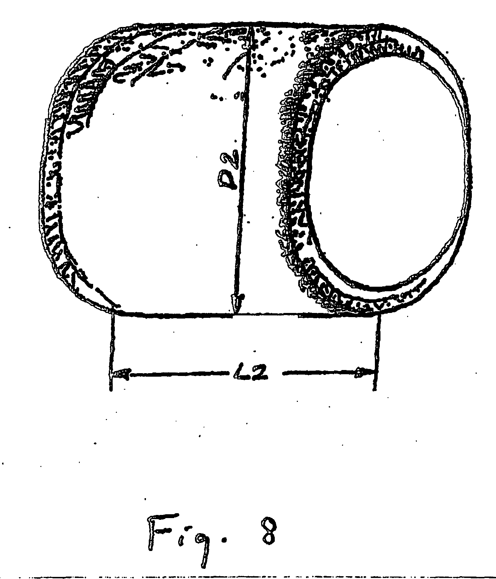

Comparing Figures 7 and 8, when wrapping a round hay bale by using Modified Schuss Knitted Netting wider than the bale, a considerable amount of over-edge coverage is achieved considering the number of franzes on the outside of the hay bale. (Note that in the Figures D1=D2, L1=L2, and D3>D2). Over-edge-wrapping of hay bales provides the advantage of increasing the covered area on both sides of the bale. Because the franze length would be reduced on the smaller diameter at the extremities, some folding or pleating would be expected to occur as the net spread over the edge. However, the amount of over-edge coverage has been found to be a function of the net elongation while wrapping and the amount of modified schuss. For example, if the circumference length of the last franze is x% shorter and the bale wrapping is performed with an x+1% stretch, then the last franze will create a 1% elongation. In this case, even if the shorter franze stretches only 1%, the schusses spread to their maximum length with respect to the length of the modified schuss. Therefore, the distance between the two frames in this case is larger than the distance between the two needles on the machine. The netting merely does not shrink in width when wrapped around the bale (the distances between franzes remain nearly constant without narrowing), but on both sides of the bale, the distance between franzes becomes more than the distance between needles, due to radial forces that are created which spread the schusses to their maximum modified length.

In addition to the foregoing properties, the modified netting of the invention can also be widened to more than its original width, even where longitudinal force is applied on the netting. Such phenomenon is created on the peripheral portions of the bale as discussed above.

Further, the present invention is not limited to any particular polyolefin ribbon(s) which can be made of strands, tapes, monofilament, multifilament, or the like. Still further, it will be appreciated that a knitted netting may be produced with only some loosened schusses on both sides or at any place along the net width, the netting can be widened during wrapping process, at any predetermined area of the wrapped load, etc.

Knitted netting may also be produced with different amounts of schuss modification. If a given number of franzes are over the edge, by using higher schuss modification on those franzes would create higher coverage on both bale sides.

**Claims**

1. A knitted Raschel netting comprising longitudinal polyolefin ribbons (20), lateral polyolefin ribbons (18) knitted with said longitudinal polyolefin ribbons (20) on a machine to form a knitted netting with schusses (18) and franzes (20), wherein a schuss (18) creates legs of a triangle while a franze (20) creates a triangle base,
**characterised in that**
when rolled as knitted on the machine, at least one of said lateral polyolefin ribbons (18) of said knitted netting has an actual length more than 110% of the length of a calculated schuss length for said knitted netting.

2. A knitted netting in accordance with claim 1 **characterised in that** said at least one of said lateral polyolefin ribbons (18) comprises a plurality of polyolefin ribbons.

**3.** A knitted netting in accordance with claim 2 **characterised in that** said plurality of polyolefin ribbons (18) are on the outside edges of the knitted netting.

**4.** A knitted netting in accordance with claim 2 or claim 3 **characterised in that** said plurality of polyolefin ribbons (18) comprises all of said lateral polyolefin ribbons.

**5.** A knitted netting in accordance with claims 1 to 4 for use in wrapping a cylindrical bale of agricultural crops **characterised in that** said knitted netting extends about the circumference and over die edge of said cylindrical bale enclosing to maintain the crops therein.

**6.** A knitted netting in accordance with claim 5 for use in wrapping a bale of agricultural crops, **characterised in that** said knitted netting extends over the edge of the cylindrical bale securing the edges thereof.

**7.** A method of producing knitted Raschel netting in a knitting machine, comprising supplying lateral polyolefin ribbons (18), supplying longitudinal polyolefin ribbons (20), adjusting at least one of the lateral polyolefin ribbon paths in the knitting machine, knitting the lateral polyolefin ribbons (18) knitted with the longitudinal polyolefin ribbons (20) to form a knitted netting (16) with schusses (18) and franzes (20), wherein a schuss (18) creates legs of a triangle while a franze (20) creates a triangle base,
**characterised in that**
said step of adjusting at least one of the lateral polyolefin ribbons paths results in a lateral polyolefin ribbon (18) in the knitted netting when rolled as knitted on the machine, having an actual length more than 110% of the length of a calculated schuss length for the knitted netting.

**8.** A method of producing knitted netting in a knitting machine as claimed in claim 7 **characterised in that** the step of adjusting at least one of the lateral polyolefin ribbon paths further comprises using a corrugated trick plate (22) in the knitting machine.

**Patentansprüche**

**1.** Raschel-Wirknetz, umfassend Polyolefin-Längsbänder (20) und Polyolefin-Querbänder (18), die mit den Polyolefin-Längsbändern (20) an einer Maschine zur Bildung eines Wirknetzes mit Schüssen (18) und Fransen (20) gewirkt werden, wobei ein Schuss (18) die Schenkel eines Dreiecks, während eine Franse (20) eine Dreiecksbasis bildet, **dadurch gekennzeichnet, dass**, wenn es in dem auf der Maschine gewirkten Zustand gerollt wird, wenigstens eines seiner Polyolefin-Querbänder (18) eine tatsächliche Länge aufweist, die mehr als 110% der Länge einer berechneten Schusslänge für das Wirknetz beträgt.

**2.** Wirknetz nach Anspruch 1, **dadurch gekennzeichnet, dass** das wenigstens eine der Polyolefin-Querbänder (18) mehrere Polyolefin-Bänder umfasst.

**3.** Wirknetz nach Anspruch 2, **dadurch gekennzeichnet, dass** sich die mehreren Polyolefin-Bänder (18) an den äußeren Rändern des Wirknetzes befinden.

**4.** Wirknetz nach Anspruch 2 oder 3, **dadurch gekennzeichnet, dass** die mehreren Polyolefin-Bänder (18) sämtliche der Polyolefin-Querbänder umfassen.

**5.** Wirknetz nach einem der Ansprüche 1 bis 4 zur Verwendung in der Umhüllung eines zylindrischen Ballens landwirtschaftlichen Ernteguts, **dadurch gekennzeichnet, dass** sich das Wirknetz um den Umfang und über den Rand des zylindrischen Ballens erstreckt, um das Erntegut darin einhüllend zu halten.

**6.** Wirknetz nach Anspruch 5 zur Verwendung in der Umhüllung eines Ballens landwirtschaftlichen Ernteguts, **dadurch gekennzeichnet, dass** sich das Wirknetz um den Rand des zylindrischen Ballens erstreckt, um dessen Ränder zu sichern.

**7.** Verfahren zur Erzeugung eines Raschel-Wirknetzes in einer Wirkmaschine, umfassend das Zuführen von Polyolefin-Querbändern (18), das Zuführen von Polyolefin-Längsbändern (20), das Einstellen von wenigstens einem der Polyolefin-Querbandpfade in der Wirkmaschine, das Wirken der Polyolefin-Querbänder (18), die mit den Polyolefin-Längsbändern (20) gewirkt werden, zur Bildung eines Wirknetzes (16) mit Schüssen (18) und Fransen (20), wobei ein Schuss (18) die Schenkel eines Dreiecks, während eine Franse (20) eine Dreiecksbasis bildet, **dadurch gekennzeichnet, dass** der Schritt des Einstellens wenigstens eines der Polyolefin-Querbandpfade zu einem Polyolefin-Querband (18) in dem Wirknetz führt, das, wenn es in dem auf der Maschine gewirkten Zustand gerollt wird, eine tatsächliche Länge aufweist, die mehr als 110% der Länge einer berechneten Schusslänge für das Wirknetz beträgt.

**8.** Verfahren zur Erzeugung eines Wirknetzes in einer Wirkmaschine nach Anspruch 7, **dadurch gekennzeichnet, dass** der Schritt des Einstellens wenigstens eines der Polyolefin-Querbandpfade des Weiteren die Verwendung eines gewellten Nadelbetts (22) in der Wirkmaschine, umfasst.

**Revendications**

1. Un filet Raschel tricoté se composant de rubans longitudinaux en polyoléfine (20), de rubans latéraux en polyoléfine (18) tricotés avec lesdits rubans longitudinaux en polyoléfine (20) sur une machine de manière à créer un filet tricoté avec des schuss (18) et des franzes (20) dont un schuss (18) crée des pattes d'un triangle tandis qu'un franze (20) crée une base de triangle, **caractérisé en ce que**, quand ils sont enroulés sous forme tricotée sur la machine, au moins l'un desdits rubans latéraux en polyoléfine (18) dudit filet tricoté présente une longueur effective supérieure à 110% de la longueur d'une longueur schuss calculée pour ledit filet tricoté.

2. Un filet tricoté selon la revendication 1 **caractérisé en ce que** ledit ruban latéral en polyoléfine (18) comprend une pluralité de rubans de polyoléfine.

3. Un filet tricoté selon la revendication 2 **caractérisé en ce que** ladite pluralité de rubans en polyoléfine (18) sont situés sur les bords extérieurs du filet tricoté.

4. Un filet tricoté selon la revendication 2 ou la revendication 3 **caractérisé en ce que** ladite pluralité de rubans en polyoléfine (18) comprend la totalité desdits rubans latéraux en polyoléfine.

5. Un filet tricoté selon les revendications 1 à 4 destiné à être utilisé pour l'enveloppement d'une balle cylindrique de récolte agricole, **caractérisé en ce que** ledit filet tricoté s'étend autour de la circonférence et par dessus le bord de la balle cylindrique enfermant la récolte pour l'y maintenir.

6. Un filet tricoté selon la revendication 5 destiné à être utilisé pour l'enveloppement d'une balle de récolte agricole, **caractérisé en ce que** ledit filet tricoté s'étend au-delà du bord de la balle cylindrique en en fixant les bords.

7. Une méthode pour la fabrication de filet Raschel tricoté dans une machine de tricotage, comprenant les étapes consistant à amener des rubans latéraux en polyoléfine (18), à amener des rubans longitudinaux en polyoléfine (20), à ajuster au moins l'un des trajets des rubans latéraux en polyoléfine dans la machine de tricotage, à tricoter les rubans latéraux en polyoléfine (18) tricotés avec les rubans longitudinaux en polyoléfine (20) de manière à former un filet tricoté (16) avec des schuss (18) et des franzes (20) dont un schuss (18) crée des pattes d'un triangle tandis qu'un franze (20) crée une base de triangle, **caractérisée en ce que** ladite étape de réglage d'au moins l'un des trajets de rubans latéraux en polyoléfine conduit à un ruban latéral en polyoléfine (18) dans le filet tricoté quand il est enroulé sous forme tricotée sur la machine, ayant une longueur effective supérieure à 110% de la longueur d'une longueur schuss calculée pour le filet tricoté.

8. Une méthode de fabrication de filet tricoté dans une machine de tricotage selon la revendication 7 **caractérisée en ce que** l'étape consistant à régler au moins l'un des trajets de rubans latéraux en polyoléfine consiste au surplus à utiliser une plaque de parage ondulée (22) dans la machine de tricotage.

PRIOR ART

FIG. 1

FIG. 2

FIG. 3a

FIG. 3b

FIG. 3c

26

FIG. 4b

24

22

24

24

FIG. 4a

SHRINKAGE/ELONGATION - PRIOR ART NETTING

ELONGATION IN %

SHRINKAGE IN %

FIG. 5

EP 0 919 655 B2

FIG. 6

12

FIG. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5104714 A
- US 4781291 A
- US 4569439 A
- DE 4301232 A
- US 3646782 A